# EUROPEAN PATENT SPECIFICATION

(11) **EP 0 352 115 B1**
(45) Date of publication and mention of the grant of the patent: **27.10.1993**
(21) Application number: 89307391.6
(22) Date of filing: 20.07.1989
(51) Int. Cl.: H01M 10/06, H01M 4/20, H01M 4/68

(54) **Lead-acid battery**
Bleiakkumulator
Accumulateur au plomb

(30) Priority: 21.07.1988 JP 182670/88; 27.07.1988 JP 189339/88; 04.08.1988 JP 195438/88; 08.08.1988 JP 198539/88
(43) Date of publication of application: 24.01.1990
(73) Proprietor: YUASA CORPORATION, Takatsuki-shi, Osaka 569 (JP)
(72) Inventor: Hohjo, Eiji c/o Yuasa Battery Co., Ltd., Takatsuki-shi Osaka (JP); Kishimoto, Kenjiro c/o Yuasa Battery Co., Ltd., Takatsuki-shi Osaka (JP); Kasai, Yoshio c/o Yuasa Battery Co., Ltd., Takatsuki-shi Osaka (JP); Nakashima, Hiroto c/o Yuasa Battery Co., Ltd., Takatsuki-shi Osaka (JP); Matsushita, Osamu c/o Yuasa Battery Co., Ltd., Takatsuki-shi Osaka (JP)
(74) Representative: Linn, Samuel Jonathan

(56) References cited:
- GB-A- 1 495 368
- CHEMICAL ABSTRACTS, vol. 108, no. 2, January 11, 1988, Columbus, Ohio, USA KAWASETSU et al. "Lightweight lead-acid battery electrodes" page 162, abstract-no. 8 801f

## Description

The present invention relates to lead-acid batteries.

The capacity of a conventional lead-acid battery is, as known well, defined by the amounts of active materials in the negative and positive plates and sulfuric acid in the electrolyte.

In a lead-acid battery with a specific volume or a specific weight, in order to increase the active material utilization, it is necessary to decrease the active materials and increase the sulfuric acid volume, or to use sulfuric acid of higher concentration. However, raising the rate of utilization of positive active material encourages softening and shedding of the active material, and also accelerates grid corrosion. As a result, the cycle and the float life performance of the resulting battery are shortened.

On the other hand, increasing utilization of negative active material decreases the resistance of the active material to sulfation, and its life is shortened. When sulfuric acid of higher concentrations is used, the volume efficiency and weight efficiency of the battery can be increased. Nevertheless, since increased sulfuric acid concentration promotes sulfation of the negative active material, it leads also to shortening of the battery life.

Plates used in lead-acid batteries can be roughly classified into pasted types and tubular types. Whichever type is used, it takes considerable electric energy and time in the formation process to activate the unformed active material. Actually, excess electric quantity in this formation process is necessary in order to activate the active material of the positive plate, in particular, and usually two to four times as much as theoretically necessary. This seems due to electro-conductivity of lead dioxide, which is the positive active material, being low, and electro-conductivity between active material particles is maintained only by the contact between particles. Thus, when forming the positive plate, first those particles in contact with the current collector are oxidized to become lead dioxide. Next, other particles contacting with the lead dioxide are formed, and this process is repeated to make up a formed plate. Therefore, particles furthest away from the current collector are formed last, effectively in the final stage of the formation process. In such formation process, the density of formation current in active material particles is high at first and decreases to low in the final stage, and, overall, the efficiency of the formation current is reduced. To assist the formation, minium (Pb₃O₄) may be added to the unformed active material. Then the required electric quantity is decreased as the oxidation is advanced. Nonetheless the formation starts from the vicinity of the current collector and is progressive so that the overall efficiency of the electric quantity for formation remains low. Also, minium is expensive, and its demerit of high cost is greater than its merit in saving of energy consumption for formation.

It is proposed in US Patent 4,631,241 to mix graphite in the positive active material, hold the electrolyte between layers of graphite, and increase pore volume in the positive plate so as to increase the capacity. Since the graphite possesses electrical conductivity, it is possible to connect the particles of the active material electro-conductively. However, the graphite disclosed in this cited reference is large in particle size, that is, 340 µm, and the number of particles is too few to connect between many particles of the active material. The number of active material particles per unit volume is estimated to be around 1 x 10¹² to 1 x 10¹⁶ in the case of positive plate, and 1 x 10⁹ to 1 x 10¹³ in the case of negative plate, according to the specific surface area, pore size distribution and other data. By contrast, when graphite of this size of 340 µm is added at 1 wt.% into the active material, the number of graphite particles per unit volume is about 500 to 1,000 at most, and this number is too small to expect extensive conductive connection among particles of the active material.

To improve connection between active material particles, or between active material particles and grid, it has been proposed to include carbon fibers or other electro-conductive fibers in the active material, see Japanese Laid-Open Patents 61-128466, 54-10574, and 58-57264, also Japanese Laid-Open Patent 49-103135 mentioning whiskers of carbon fibers and lead. Carbon fibers of 10 to 1,000 µm in diameter are concerned in Japanese Laid-Open Patent 54-105741, and at such diameter and surface area, the number of contacts with the active material particles is small, and conductivity is not enhanced dramatically.

Japanese Laid-Open Patent 49-103135 does not say how to obtain this "lead or other metal whiskers" nor specify their characteristics, dimensions etc, so its teaching cannot be checked by the present inventors.

When the present inventors mixed lead fibers of 30 µm in diameter cut to 2 mm size obtained by resonant vibration method into the active material, the density of the active material was raised and the contact density appeared to be enhanced, but, actually, the rate of utilization of active material and the charge acceptability were not improved.

According to Japanese Laid-Open Patent 61-45565, conductive synthetic resin fibers of 1 to 10 µm in diameter obtained by mixing carbon powder or acid-proof metal powder into polyolefin or polyester synthetic resin are mixed into the active material. However, the conductive synthetic resin fiber obtained in this manner, whilst effective for reinforcement of the active material, is not found effective as to conductivity of the fibers themselves for significantly enhancing electro-conductivity among particles. Moreover, to mix fibers of 1 to 10 µm gives rise to reduction of the apparent density of the active material, and no confirmation was obtained of indicated enhancement of contact between the active material and the grid made of Pb-Ca alloy and prevention of formation of barrier layers.

In order to improve the charge acceptability of the negative plate, carbon black is often added. In this case, the effect is mainly to lower final charging voltage. Decreasing hydrogen overvoltage of the negative plate allows increased current in the final stage of charging. Carbon black has a very small particle size as compared with the graphite mentioned above. Therefore, addition of 0.2 wt.% will be a sufficient amount for making contact with most individual particles of the active material. However, since carbon black particles lack length, they merely subsist among the particles of the active material. Certainly far less than tens or hundreds of active material particles are mutually connected in parallel. Improvement of the charge acceptability of the negative plate by the addition of carbon black increases charging current by lowering charging voltage, but it does not mean that the current is made easier to flow in the individual particles of the active material. Rather, a large current also flows in the positive plate in the final stage of charging, and corrosion of the positive grid is accelerated by the increase of the overcharge amounts, and that cannot be said to be beneficial to life or performance. In other words, addition of carbon black to the negative plate does not lead to any significant improvement of charge acceptability.

It is amongst objects of the invention to solve the problems of the prior art as discussed above by presenting a lead-acid battery which is improved as to one or more of
(1) enhanced rate of utilization of active materials of both positive plate and negative plate, possessing higher weight efficiency and volume efficiency than before,
(2) improved charge acceptability (charge efficiency) of the active materials of both positive plate and negative plate, possessing a long cycle service life performance and a long float service life performance,
(3) improved resistance to sulfation, passable use of sulfuric acid of higher concentration, and better rate of utilization without sacrificing the life,
(4) reduction of electric quantity required for formation of the positive plate, and
(5) cost.

According to the invention, and as applicable to a lead-acid battery comprising a positive plate composed of a current collector containing pure lead or lead alloy with a positive active material mainly of lead dioxide closely contacting therewith and a negative plate composed of a current collector containing pure lead or lead alloy with a negative active material mainly made of metal lead in sponge form closely contacting therewith, whiskers possessing electronic conductivity are disposed at least in one of positive and negative active materials to interconnect active material particles preferably further with current collector of a said negative plate.

For such whiskers, carbon, graphite, and titanate are suitable. The quantity of whiskers is preferably 0.01 to 10 wt.% of the weight of the active material, advantageously 0.01 to 2 wt.%, and the diameter of the whiskers should be 10 µm or smaller, advantageously 0.01 to 1.0 µm, and the ratio of diameter (D) to length (L) (L/D) of the whiskers, i.e. the aspect ratio, should be 50 or more, advantageously 100 to 1,000.

Specific implementation of the invention is now further described by way of example with reference to the accompanying drawings, in which:
FIG. 1 is a scanning SEM showing fibers, actually carbon whiskers, used in a lead-acid battery;
FIG. 2 is a diagram comparing capacity and discharge current between a battery of the invention and a conventional lead-acid battery;
FIG. 3 is a diagram similarly comparing utilization of active material;
FIG. 4 is a diagram comparing the life performances for other batteries of the invention;
FIG. 5 is a diagram similarly comparing formation parameters; and
FIG. 6 is a diagram similarly comparing relation of charging current and battery voltage.

### Example 1

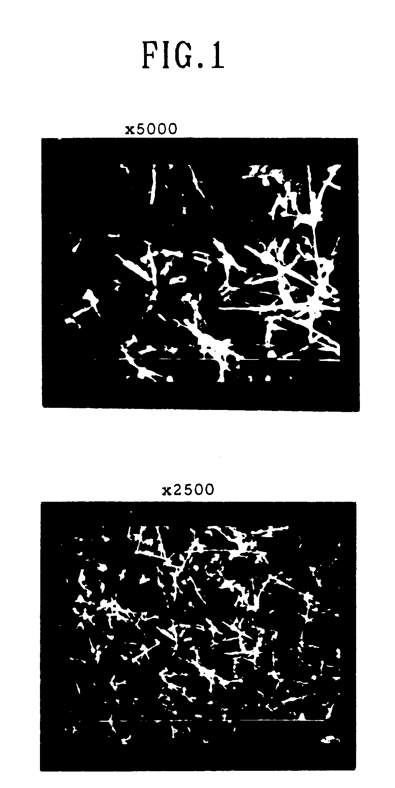

In 940g of water, 60g of carbon whiskers were uniformly dispersed by a superhigh speed mixer. the carbon whiskers used in this embodiment were made of hydrocarbon, and manufactured by the vapor deposition growth method. As shown in the SEM in FIG. 1, whisker diameter was about 0.05 to 0.8 µm, and length was about 10 to 100 µm, with an aspect ratio of about 100, so that length is long relative to a very small diameter. Whisker density was 1.96 g/cm³, the electronic conductivity was 7 x 10 ⁻⁴ ohm-cm, and the specific surface area by the BET method was 10 to 40 m²/g.

To 170g of that carbon whisker dispersion, 1,000g of lead oxide powder containing about 30 wt.% of metal lead was added and kneaded, and 75 cm³ of sulfuric acid at specific gravity of 1.40 was gradually taken in while continuing to knead, resulting in a paste A for a positive plate. A similar operation was conducted except for addition of lignin and barium sulfate to the carbon whisker dispersion resulting in a paste B for a negative plate.

For comparison purposes similar operations, but without adding carbon whiskers, were used to make a generally conventional paste C for the positive plate and paste D for the negative plate.

Cast grids measuring 38 width by 67 length by 3.3 thickness (2.0) in mm made of Pb-Ca-Sn alloy free from antimony were coated with the above pastes by conventional methods, the figure in parentheses referring to the dimension of the grid for the negative plate.

The pasted plates were hydroset at 35°C, 100% RH (relative humidity) for 3 days. After drying at 50°C for 1 day, unformed positive plates A, C, and negative plates B, D were obtained.

Properties of the paste, and weight of the unformed active materials after drying were as shown in Table 1.

**Table 1**

| | | Paste | | After drying |
|---|---|---|---|---|
| | | Apparent density (g/cm²) | Pasted weight (g/plate) | Unformed active material (g/plate) |
| This invention | Positive plate A | 3.73 | 26.2 | 23.9 |
| | Negative plate B | 3.72 | 16.5 | 15.1 |
| Prior art | Positive plate C | 4.02 | 28.3 | 25.2 |
| | Negative plate D | 4.02 | 17.8 | 15.9 |

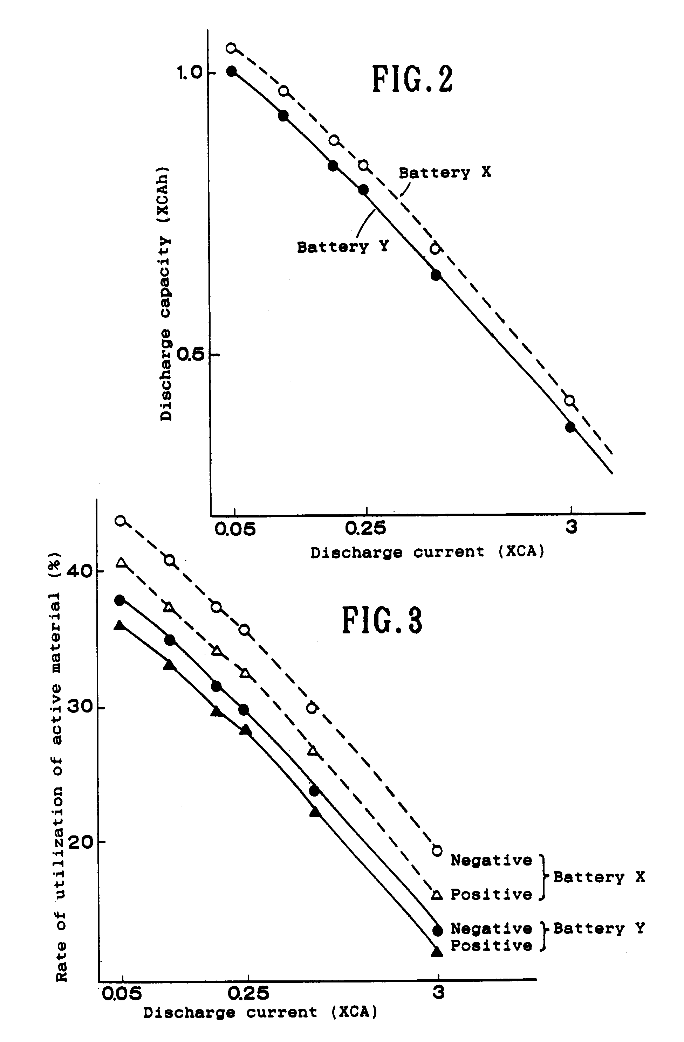

Two positive plates A and three negative plates B were stacked using fine glass separators as disclosed in Japanese Patent No 1272702 to make up a plate group, then put into a battery container as a sealed lead-acid battery X of this invention, while a conventional sealed lead-acid battery Y was prepared in the same manner by using plates C and D. The batteries were filled with 45 cm³ of H₂SO₄ per cell, and a safety vent valve installed. Formation was conducted for about 30 hours at a constant current of 0.8A. Investigation of the capacity of these batteries at various discharge currents (0.05 to 3 CA - where C is the nominal capacity of the battery) produced results shown in FIG. 2. Corresponding rates of utilization of active material were calculated from those results to give the curves shown in FIG. 3.

### Example 2

Combining the negative plate B and positive plate C obtained in Example 1, a second sealed lead-acid battery 2X of the present invention, and a third battery 3X with enhanced electrolyte specific gravity of 1.350d, were obtained after formation. The 20-hour capacity, and the calculated weight efficiency and volume efficiency of these batteries 2X, 3X and conventional battery Y are as shown in Table 2.

**Table 2**

| | Type | Positive plate | Negative plate | Electrolyte sp. gr. | 20HR capa. (Ah) | Weight eff. (WH/kg) | Volume eff. (WH/ℓ) |
|---|---|---|---|---|---|---|---|
| This invention | Battery 2X | C | B | 1.300 | 4.10 | 29.4 | 74.9 |
| | Battery 3X | C | B | 1.350 | 4.67 | 33.5 | 85.3 |
| Prior art | Battery Y | C | D | 1.300 | 4.00 | 28.2 | 73.1 |

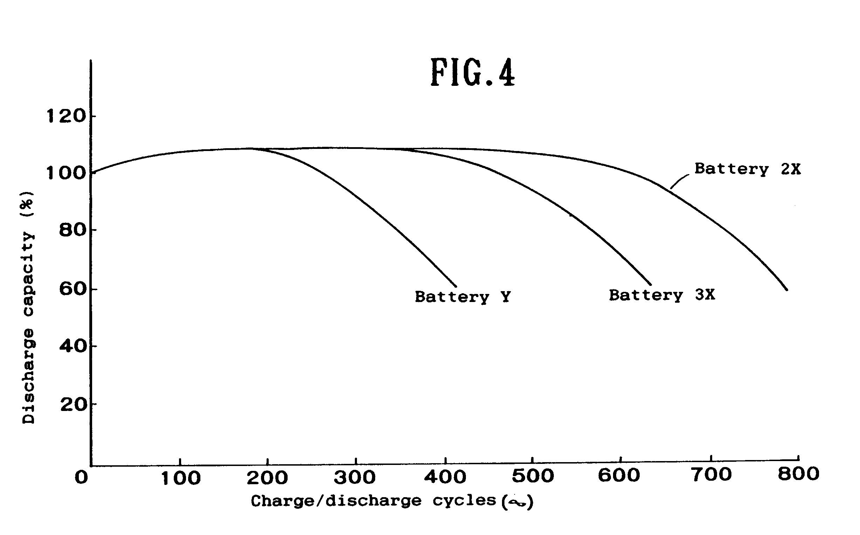

The results of cyclic life testing of these batteries are shown in FIG. 4, using test conditions as follows;

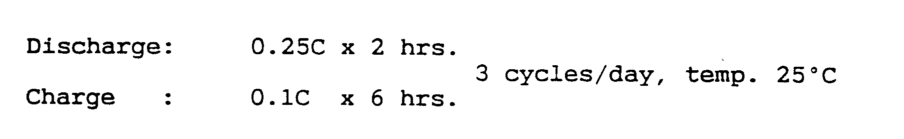

At every 50 cycles, a capacity test was conducted at a current of 0.25CA. The cut-off voltage was 1.700 V/cell.

### Example 3

An unfilled tubular plate having a glass fiber woven tube inserted into a spine made of Pb-3% Sb alloy was filled with lead oxide powder alone (0) and containing graphite whiskers at 0.5, 1.0, 1.5, 3.0, and 5.0 wt.% of positive active material, and unformed tubular type positive plates were fabricated.

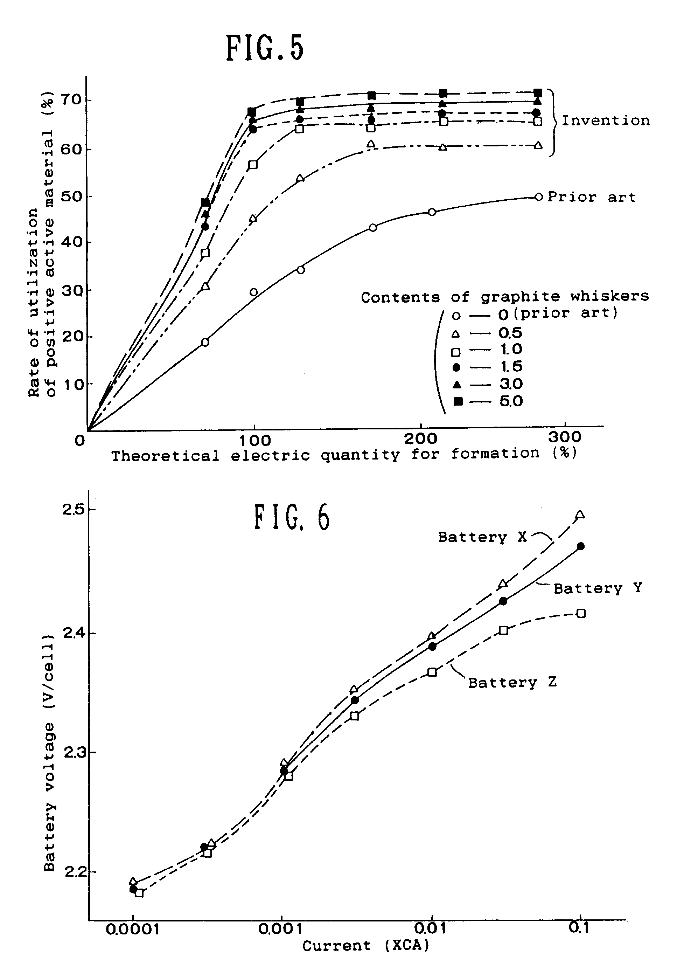

One unformed positive plate and two conventional negative plates were combined, and put into a container. In a sulfuric acid solution at a specific gravity of 1.10, formation was conducted at a current density of 1 A/dm² per positive plate. The plate was taken out at specific time intervals, and discharge tested to assess progress of formation of the positive plate, and the results of FIG. 5 were obtained.

In FIG, 5, the abscissa denotes percentage of the theoretical formation electric quantity calculated from the weight of the unformed active material. Effectively, 100% shows the minimum limit of electric quantity necessary for formation.

### Example 4

Another conventional negative plate E was prepared by adding 0.3 wt.% of carbon black to the negative active material of Example 1. The specific surface area of this carbon black was 1,500 m²/g. Combining this negative plate E and positive plate C, a conventional sealed lead-acid battery Z was obtained.

Using the sealed lead-acid battery X of this invention, and conventional sealed lead-acid batteries Y and Z, the relation between charging current and terminal voltage was studied by charging with a constant current of 0.0001 to 0.5 CA, and results are shown in FIG. 6.

### Example 5

From active material containing graphite whiskers and potassium titanate whiskers at 1 wt.% of the active material, unformed positive and negative plates F, G, and H, I were made up. The graphite whiskers were prepared by heating carbon whiskers at 3000°C. Size hardly changed, but the electro-conductivity was 5 x 10⁻⁵ ohm-cm, representing one digit higher than that of carbon whiskers. The potassium titanate whiskers were of Dentol BK-300 (trade name) made by Otsuka Chemical Co. They measured 0.2 to 0.5 µm in diameter and 10 to 20 µm in length, and electro-conductivity was 1 x 10⁻¹ ohm-cm, i.e. lower than that of carbon whiskers. (To conform to the invention only whiskers having an aspect ratio (L/D) of more than 50 are to be used)

A grid was made of Pb-1.5% Sb alloy, measuring 108 W by 110 L by 1.7 (1.1) T in mm (the figure in parentheses is the thickness of the negative grid). Resulting unformed plates were stacked by way of interposing a porous polyethylene separator between them, and inserted into a container with a lid adhered and filled with electrolyte. By passing 120% of the theoretical formation electric quantity calculated from the weight of the positive active material, a 28 Ah/5 HR. lead-acid battery (typical for automobile use) was obtained. The remaining whisker quantity in the positive plate after formation of the batteries, capacities, and charge acceptance according to JIS D 5301 were investigated, and the results are shown in Table 3. In testing charge acceptance, current at the 10th minute for embodiments of the present invention was smaller than for the conventional battery, which is because the quantity of electricity flowing in the first 10 minutes at the initial stage is larger than in the conventional battery.

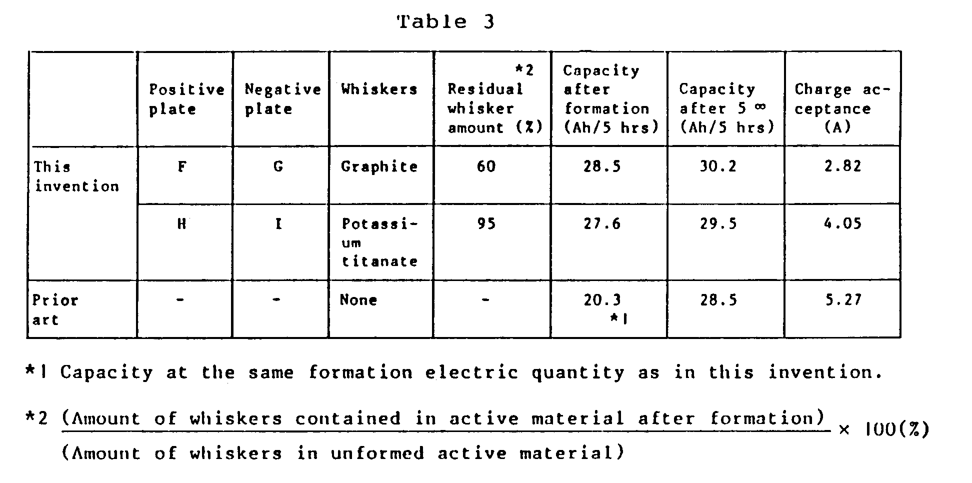

It is evident from Example 1 that the lead-acid battery concerned has improved rate of utilization of active material. High weight and volume efficiencies are also obtained.

The number of particles of active material per unit volume is estimated at 1 x 10¹² to 1 x 10¹⁶ for positive, and at 1 x 10⁹ to 1 x 10¹³ for negative. At about 1 wt.% of whiskers added to the active material, the number of whiskers is estimated to be 1 x 10¹⁰ to 1 x 10¹³ per unit volume. As the aspect ratio of the whiskers is high, the number of particles of the active material contacting any one whisker is estimated to be around 50 to 1,000.

For a negative battery plate, then, it is estimated that several carbon whiskers will contact the same particle of active material. Conventionally, of course, particles were electrically separate from each other, not bonded electro-conductively as herein. Therefore, not only in charging and discharging, but also in the formation process, electric current will flow much more easily, and a higher charge acceptability, a greater discharge capacity, and an improved formation efficiency will be obtained. This is also demonstrated in Examples 3 and 5.

Negative active material becomes a hardly reducible, coarse crystalline sulfate for electrolyte of high concentration, and charging and discharging at high temperature is of lower capacity.

Conventionally, sealed lead-acid batteries have reduced volume of electrolyte compared with flooded lead-acid batteries, but concentration of electrolyte still becomes higher in the lower part of the cell and lower in the upper part due particularly to repetitive deep discharge, i.e. stratification occurs. The lower part of the negative plate is usually remote from the lug, and sulfuric acid at higher concentration has higher electrical resistance and lower solubility for lead sulfate. Therefore, stratification causes the lower part of negative plate to be sulfated. Using this invention, however, electrical resistance in the plate is lower and a sufficient current flows even in the lower part of the negative plate in spite of its spacing from the lug, and the problem of shortened battery life due to sulfation of the negative plate is reduced. This is demonstrated by Example 2.

Thus, the conventional sealed type lead-acid battery Y has a shorter life due to sulfation in the lower part of the negative plate, but both of the sealed lead-acid battery 2X and the battery 3X using H₂SO₄ electrolyte of higher specific gravity of 1.350 d, each embodying this invention, have much improved life performance.

Electrolyte of higher specific gravity has a lower content of water (H₂O) that is unrelated to the charge and discharge reaction, and, whether sealed or not, it is thus possible to improve the weight efficiency and volume efficiency of the battery.

Hitherto, in conventional lead-acid batteries, sulfation resistance of the negative plate to electrolyte of higher specific gravity was poor, so use of such electrolyte meant shortening of battery life. By this invention, and without sacrificing the life, it is possible for a lead-acid battery to have a high weight and volume efficiency, as demonstrated by Example 2.

It is the case that unformed active material is lead sulfate (tribasic or tetrabasic) or lead oxide (when filled), and these materials lack electrical conductivity. Formation proceeds sequentially from the particles contacting the grid or spine used as the current collector. So, remote active material particles, i.e. not contacting the current collector, will not be formed until supplied with electrons by way of the particles intervening between these remote particles and the current collector. Accordingly, hitherto, especially in the positive plate, it took a long time and a large quantity of electricity for formation, typically requiring about twice to four times as much as theoretically needed. However, using the present invention, even particles remote from the current collector are effectively connected electrically with the current collector by way of electronically conductive whiskers, so that the active material particles can be formed throughout as soon as formation begins. Hence, efficiency of formation is much higher, and, even in the case of tubular type battery, mixing of minium or the like is not needed. Usually, it is enough to use less than twice the theoretically required formation electric quantity, even no more than 1.1 times. Generally, formation time and electric quantity can be reduced to 1/2 to 1/4 of that for conventional batteries, so higher productivity and lower costs can be achieved.

Conventionally, in order to improve the charge acceptance of the negative plate, carbon black was added. It is effective to increase charging electric quantity by lowering hydrogen overvoltage of the negative plate thus increasing current flow in the final stage of charging. Nonetheless overcharged electric quantity is quite large in practice. That can lead to decrease of electrolyte level because of electrolysis of water, increase of frequency of topping up, and acceleration of corrosion of the positive grid.

Thus, electron conduction between the current collector and the active material particles remote from it depends only on the reduced active material particles and carbon black particles between them, i.e. is still somewhat progressive from particle to particle. In embodiments of this invention, active material particles remote from the current collector begin to be charged immediately from start of charging, and the charging efficiency is very high. Moreover, carbon and/or graphite whiskers do not lower hydrogen overvoltage of the negative plate as shown in Example 4. So, as shown in Example 5, charge acceptance in the initial stage of charging is better, and charging current flowing in the battery in the final stage of charging is smaller than that for the prior art. That overcomes the demerits of increase of frequency of topping up and acceleration of corrosion of positive grid as experienced conventionally by adding carbon black. Incidentally, better charge acceptability is accompanied by higher resistance to sulfation as mentioned above.

Accordingly, it is evident that the lead-acid battery of this invention has a longer life than the conventional one if used in floating application, as can easily be understood from Examples 2 and 4.

Whiskers as used in this invention encourage the flow of electrons into the active material particles remote from the current collector. For this purpose, the whiskers themselves have a high electro-conductivity and are of longer size and greater in number. Electrical conductivity can be 1 x 10⁻¹ ohm-cm or more, preferably 1 x 10⁻³ ohm-cm or more. In order to connect as many active material particles as possible without substantially decreasing the amount of active material, the whiskers are short fibers but having as small as practicable a diameter and much longer length. A diameter of 30 µm or more generally does not permit an adequate number per unit volume. A diameter smaller than 10 µm, preferably smaller than 1 µm, and an aspect ratio of 50 or more can produce beneficial results. Most preferably, whiskers have a diameter of 0.01 to 1.0 µm, and an aspect ratio of 100 to 1,000.

As materials for whiskers, conductivity etc requirements should now be clear and carbon, graphite and potassium titanate of the foregoing embodiments, should be considered as exemplary i.e. not excluding use of other suitable materials.

When whiskers are used in the positive plate, whether of carbon or of graphite heat treated at high temperature to improve resistance to oxidation, oxidization can force some carbon or graphite out of the active material, including physically by oxygen gas generated; in fact, nearly half can be lost during the formation process. Therefore, when a lead-acid battery of this invention is completed, i.e. its plates fully formed, the amount of whiskers remaining in the positive plate will be smaller than the amount initially mixed into the active material. So, for beneficial effects of whiskers not only in the formation process but also subsequently, their quantity added initially to the active material should be higher than if beneficial effects are to be derived only in the formation process.

In the former case, addition ratio relative to the unformed positive active material should be 1 to 10 wt.%, preferably 1 to 5 wt.%. In the latter case, the addition ratio can be 0.01 to 3 wt.%, preferably 0.01 to 2.0 wt.%.

In the case of the negative plate, carbon or graphite whiskers will not be lost and their beneficial effect will be available throughout the whole life of the battery. Formation is thus simpler compared with the positive plate, and the amount of whiskers can be determined on a single basis involving expected effect and economy.

The content of carbon whiskers or graphite whiskers for negative active material should be 0.01 to 3 wt.%, or preferably 0.01 to 2.0 wt.%.

Another relevant factor for maximising the effecting the whiskers is their dispersion uniformly in order to achieve a consistently high average contact effect between the whiskers and the active material particles. For this purpose, instead of directly mixing into the lead powder material, as in Example 1, it is usually better to disperse preliminarily in water using superhigh speed mixer. To improve dispersion in water, at least in the case of carbon or graphite whiskers, it can be useful to include a surface active agent or directly provide the carbon or graphite surface with hydrophilic groups in vapor phase. Then, more uniform dispersion may be attained without using a superhigh speed mixer.

Another consideration in using whiskers is maintaining appropriate density of active material. When the positive grid is made of pure lead, calcium alloy, or lead alloy free from antimony, if the apparent density of the active material is small, the diffusion of the electrolyte is too smooth, and a corrosion layer of the grid surface can be discharged before the active material is completely discharged, and lead sulfate results which is an insulating material and can prevent electronic conduction between the active material and grid, so that the nominal capacity may not be attained.

To counter this effect, for example, when using carbon whiskers, sodium metaphosphate, sodium pyrophosphate, or other metaphosphoric or pyrophosphoric alkali metal salts have been included in the paste, resulting in an active material high in density where the ratio of whiskers to the active material is relatively high. Such phosphoric alkali metal salt transforms the corrosion layer on the surface of the grid, and this corrosion layer is not changed into a form to insulate between the grid and active material, so that the discharge can be maintained.

The quantity of the negative active material affects high rate discharge capacity. For nonmetallic whiskers in the negative plate, a lead-acid battery having superior high rate discharge characteristic will be obtained by mixing such pyrophosphoric or metaphosphoric alkali metal salt into the paste.

Appropriate addition ratio of such pyrophosphoric or metaphosphoric alkali metal salt to the active material varies with the amounts of sulfuric acid and water used for preparing the paste. To obtain an appropriate positive paste density of 3.7 to 4.5 g/cm³ and negative paste density of 3.5 to 4.5 g/cm³, the ratio to the active material is generally 0.001 to 5 wt.%. Using a ratio in this range, positive active material apparent density of 3.3 to 4.0 g/cm³ and negative active material apparent density of 3.1 to 4.0 are capable of providing both satisfactory life performance and high rate discharge performance. If the ratio is less than 0.001 wt.%, the apparent density of the paste is not raised, and if more than 5 wt.%, the self-discharge rate of the obtained battery can be too high.

When carbon fiber with a diameter of 7 to 20 µm was mixed into the active material, the apparent density of the active material was lowered as mentioned above, and the life became shorter. Such problem is avoided by using thinner whiskers of this invention. Specifically, when added by about 1 wt.% to positive active material for which apparent density without addition was 4.02, the apparent density was lowered to 2.6 in the case of prior proposed carbon fiber, but it was lowered only to 3.73 in the case of whiskers hereof.

Moreover, the number of prior proposed carbon fibers, per 1 cm³ of apparent volume of the active material in this case was about 2 x 10⁶, and the total surface area about 80 cm², but for carbon whiskers hereof, the corresponding values are far greater, actually about 1 x 10¹¹ and 4900 cm², respectively. This is highly significant, and it is found desirable to have 1 x 10⁹ whiskers or more per 1 cm³ of active material. Prior proposed carbon fibers of relatively large diameter give lower contact pressure on the active material involving lower contacting area and number of fibers are extremely small as compared with whiskers hereof.

We have, however, established, that when carbon fibers with diameter of 7 to 20 µm are used, achievement of beneficial effects requires tight contact between as many active material particles and carbon fibers as possible, i.e. raises density requirements for the active material.

Maintaining a high active material density is aided by addition of metaphosphoric alkali metal salt and/or pyrophosphoric alkali metal salt. When mixing carbon fibers, target apparent density of the active material is 3.0 or more, preferably 3.1 to 4.0, in the negative plate, and 3.3 or more, preferably 3.3 to 4.5, in the positive plate. Otherwise, problems of sulfation of the negative plate and discharge of the corrosion layer of the positive grid can occur, which may lead to shortening of battery life. To achieve this, while keeping the adhesion to the grid, we have used metaphosphoric alkali metal salt or pyrophosphoric alkali metal salt at 0.001 to 5 wt.% and found it satisfactory when the diameter of whiskers is as large as 7 to 10 µm. Generally, for thinner whiskers in a content not more than about 1 wt.%, a sufficiently high active material density can readily be obtained in the absence of metaphosphoric alkali metal salt and/or pyrophosphoric alkali metal salt. However, when the content is increased, or where whiskers have diameters exceeding 1 µm, such as 5 to 10 µm, coexistence of metaphosphoric alkali metal salt and/or pyrophosphoric alkali metal salt is desirable. From the viewpoint of such contact density, it is desired that the whiskers possess a specific surface area of 2 m²/g or more, or more preferably 10 to 40 m²/g.

Lead-acid batteries may be roughly classified into three types by the shape of the plates.

One is the pasted type plate having a grid of pure lead or lead alloy obtained by casting, expanding or brading methods and filled with paste of active material. Another is a tubular type plate, as shown in Example 3, fabricated by inserting a cylindrically braided tube of fibers such as glass fibers and polyester fibers into a spine made of pure lead or lead alloy, and filling the tube with active material. The third is the planté plate for obtaining the current collector and active material by electrolyzing a plate of pure lead.

The tubular type plate tends only to be used for the positive plate, and the negative plate as the counter electrode is usually a pasted type plate. Application of this invention is, of course, not limited to one type of the plate, and has particular application to both the paste or tubular types of positive or negative plates.

In order to charge a flooded lead-acid battery completely, it is generally necessary to overcharge to about 105 to 120% of discharged electric quantity. In such overcharging water in the electrolyte can become electrolyzed, and electrolyte may be lost, leading to periodic top up requirements. In order to decrease or eliminate this topping up, current collectors may be of a calcium alloy without containing antimony, and/or the required volume of electrolyte reduced, say absorbed and held in fine porous material, or gelled with silicon dioxide, high absorbing macromolecules, or the like. At least in a sealed battery, negative active material is recombined with oxygen gas generated at the positive plate in the final stage of charging. This invention may be applied to either type of lead-acid battery.

As stated herein, a lead-acid battery embodying this invention can be:
Capable of raising the utilization of positive and negative active materials, leading to higher weight efficiency and volume efficiency than before,
Improved as to charge acceptability (charge efficiency) of the positive and negative active materials, leading to long service life cycle and float life performance,
Improved as to resistance to sulfation of the negative active material, leading to capability of using sulfuric acid of higher concentration, and enhanced in the rate of utilization without sacrifice of the life, and
Reduced in electric quantity required for formation of the positive plate, and cost.

## Claims

1. A lead-acid battery wherein active material of at least one of its positive and negative plates incorporates electrically conductive whiskers in an amount of 0.01 to 10 weight percent (wt.%) of the active material, the whiskers having diameters of 10 µm or less, aspect ratios of 50 or more, and specific surface area of 2 m²/g or more, and the whiskers serving to interconnect active material particles electrically.

2. A lead-acid battery according to claim 1, wherein the conductive whiskers are of carbon and/or graphite and/or titanate.

3. A lead-acid battery according to claim 1 or claim 2, comprising a negative plate having a current collector of pure lead or a lead alloy substantially free from antimony and negative active material containing said whiskers.

4. A lead-acid battery according to any preceding claim, comprising a positive plate made basically of pure lead or calcium alloy or lead alloy free from antimony and having positive active material containing said whiskers.

5. A lead-acid battery according to any preceding claim of sealed type, wherein electrolyte is held in pores of a separator and of flanking positive and negative plates of a plate unit so as not to be freely fluid.

6. A sealed lead-acid battery according to claim 5, wherein the separator plate has a high electrolyte absorbing property and is made mainly of small glass fibers with a diameter of 1 µm or less staked together.

7. A lead-acid battery according to any preceding claim, wherein active material includes a dispersant of pyrophosphoric and/or metaphosphoric alkali metal salt.

8. A lead-acid battery according to claim 7, wherein the dispersant is sodium pyrophosphate and/or sodium metaphosphate.

9. A sealed lead-acid battery according to claim 7 or claim 8, wherein the sodium pyrophosphate or metaphosphate is present in an amount of 0.001 to 5 wt.% of positive active material.

10. A sealed lead-acid battery according to claim 9, wherein said amount is 0.05 to 0.3 wt.%.

11. A lead-acid battery according to any preceding claim, wherein the diameter of whiskers is 0.01 to 1.0 µm.

12. A lead-acid battery according to any preceding claim, wherein the aspect ratio of whiskers is 100 to 1,000.

13. A lead-acid battery according to any preceding claim, wherein the specific surface area of whiskers is 10 to 40 m²/g.

14. A lead-acid battery according to any preceding claim, wherein the ratio of whiskers to active material is 0.01 to 2 wt.%.

15. A lead-acid battery according to claim 14, wherein said ratio for whiskers is 0.01 to 1.0 wt.%.

16. A lead-acid battery of any preceding claim, wherein apparent density of positive active material is 3.3 to 4.5 g/cm³.

17. A lead-acid battery according to any preceding claim, wherein apparent density of negative active material is 3.1 to 4.0 g/cm³.

18. A lead-acid battery according to any preceding claim, wherein there are 10⁹ or more whiskers of carbon and/or graphite per 1 cm³ of apparent volume of the active material.

19. A lead-acid battery according to any preceding claim, wherein electrolyte is dilute sulfuric acid.

20. A lead-acid battery according to claim 19, wherein specific gravity of the dilute sulfuric acid electrolyte is at least 1.350 d.

21. A method of producing a lead-acid battery wherein electrically conductive whiskers are mixed in to the active material of at least one of its positive and negative plates in an amount of 0.01 to 10 weight percent (wt.%) of the active material, the whiskers having diameters of 10 µm or less, aspect ratios of 50 or more, and specific surface area of 2 m²/g or more, and the whiskers serving to interconnect active material particles electrically.

22. A method according to claim 21 wherein the whiskers are of carbon or graphite and are dispensed in water prior to mixing in to the active material.

## Patentansprüche

1. Blei-Säure-Batterie, worin aktives Material wenigstens einer ihrer positiven und negativen Platten elektrisch leitfähige Whiskers in einer Menge von 0,01 bis 10 Gewichts-Prozent (Gew.-%) des aktiven Materials eingearbeitet enthält, wobei die Whiskers Durchmesser von 10 µm oder weniger, Schlankheits-Verhältnisse von 50 oder mehr und spezifische Oberflächen von 2 m²/g oder mehr haben und die Whiskers dazu dienen, Teilchen des elektrisch leitenden Materials miteinander zu verbinden.

2. Blei-Säure-Batterie nach Anspruch 1, worin die leitfähigen Whiskers aus Kohlenstoff und/oder Graphit und/oder Titanat sind.

3. Blei-Säure-Batterie nach Anspruch 1 oder Anspruch 2, umfassend eine negative Platte mit einem Stromsammler aus reinem Blei oder einer im wesentlichen antimon-freien Blei-Legierung und ein diese Whiskers enthaltendes negatives aktives Material.

4. Blei-Säure-Batterie nach irgendeinem vorhergehenden Anspruch, umfassend eine positive Platte, die grundsätzlich aus reinem Blei oder einer Calcium-Legierung oder einer antimon-freien Blei-Legierung hergestellt ist und ein diese Whiskers enthaltendes positives aktives Material aufweist.

5. Blei-Säure-Batterie nach irgendeinem vorhergehenden Anspruch vom versiegelten Typ, worin der Elektrolyt in Poren eines Separator und flankierender positiver und negativer Platten einer Platten-Einheit gehalten wird, so daß er nicht frei fließfähig ist.

6. Versiegelte Blei-Säure-Batterie nach Anspruch 5, worin die Separator-Platte ein hohes Absorptionsvermögen für den Elektrolyten besitzt und hauptsächlich aus kleinen Glasfasern mit einem Duchmesser von 1 µm oder weniger hergestellt ist, die zusammengepflockt sind.

7. Blei-Säure-Batterie nach irgendeinem vorhergehenden Anspruch, worin das aktive Material ein Dispergiermittel aus einem Alkalimetall-Salz der Phyrophosphorsäure und/oder Metaphosphorsäure enthält.

8. Blei-Säure-Batterie nach Anspruch 7, worin das Dispergiermittel Natriumpyrophosphat und/oder Natriummetaphosphat ist.

9. Versiegelte Blei-Säure-Batterie nach Anspruch 7 oder Anspruch 8, worin das Natriumpyrophosphat oder -metaphosphat in einer Menge von 0,001 bis 5 Gew.-% des positiven aktiven Materials anwesend ist.

10. Versiegelte Blei-Säure-Batterie nach Anspruch 9, worin die genannte Menge 0,05 bis 3 Gew.-% beträgt.

11. Blei-Säure-Batterie nach irgendeinem vorhergehenden Anspruch, worin der Durchmesser der Whiskers 0,01 bis 1,0 µm beträgt.

12. Blei-Säure-Batterie nach irgendeinem vorhergehenden Anspruch, worin das Schlankheits-Verhältnis der Whiskers 100 bis 1 000 beträgt.

13. Blei-Säure-Batterie nach irgendeinem vorhergehenden Anspruch, worin die spezifische Oberfläche der Whiskers 10 bis 40 m²/g beträgt.

14. Blei-Säure-Batterie nach irgendeinem vorhergehenden Anspruch, worin das Verhältnis der Whiskers zu dem aktiven Material 0,01 bis 2 Gew.-% beträgt.

15. Blei-Säure-Batterie nach Anspruch 14, worin das Verhältnis für die Whiskers 0,01 bis 1 Gew.-% beträgt.

16. Blei-Säure-Batterie nach irgendeinem vorhergehenden Anspruch, worin die scheinbare Dichte des positiven aktiven Materials 3,3 bis 4,5 g/cm³ beträgt.

17. Blei-Säure-Batterie nach irgendeinem vorhergehenden Anspruch, worin die scheinbare Dichte des negativen aktiven Materials 3,1 bis 4,0 g/cm³ beträgt.

18. Blei-Säure-Batterie nach irgendeinem vorhergehenden Anspruch, worin 10⁹ oder mehr Whiskers aus Kohlenstoff und/oder Graphit in 1 cm³ des scheinbaren Volumens des aktiven Materials vorliegen.

19. Blei-Säure-Batterie nach irgendeinem vorhergehenden Anspruch, worin der Elektrolyt verdünnte Schwefelsäure ist.

20. Blei-Säure-Batterie nach Anspruch 19, worin das spezifische Gewicht der verdünnten Schwefelsäure wenigstens 1,350 d beträgt.

21. Verfahren zur Herstellung einer Blei-Säure-Batterie, worin elektrisch leitfähige Whiskers in das aktive Material wenigstens einer ihrer positiven und negativen Platten in einer Menge von 0,01 bis 10 Gewichts-Prozent (Gew.-%) des aktiven Materials eingemischt werden, wobei die Whiskers Durchmesser von 10 µm oder weniger, Schlankheits-Verhältnisse von 50 oder mehr und spezifische Oberflächen von 2 m²/g oder mehr haben und die Whiskers dazu dienen, Teilchen des elektrisch leitenden Materials miteinander zu verbinden.

22. Verfahren nach Anspruch 21, worin die Whiskers aus Kohlenstoff oder Graphit sind und vor dem Einmischen in das aktive Material in Wasser dispergiert werden.

## Revendications

1. Batterie acide-plomb, dans laquelle du matériau actif d'au moins l'une de ses plaques positive et négative comporte des barbes conductrices de l'électricité, en une quantité allant de 0,01 à 10 % en poids (pds.%) du matériau actif, les barbes présentant des diamètres de 10 µm ou moins, des coefficients d'aspect de 50 ou plus et une aire de surface spécifique de 2 m²/g ou plus, les barbes servant à relier électriquement les unes aux autres des particules de matériau actif.

2. Batterie acide-plomb selon la revendication 1, dans laquelle les barbes conductrices sont en carbone et/ou en graphite et/ou en titanate.

3. Batterie acide-plomb selon la revendication 1 ou 2, comprenant une plaque négative présentant un collecteur de courant en plomb pur ou en alliage de plomb sensiblement exempt d'antimoine et de matériau actif négatif contenant lesdites barbes.

4. Batterie acide-plomb selon l'une quelconque des revendications précédentes, comprenant une plaque positive réalisée à base de plomb pur ou en alliage de calcium, ou en alliage de plomb exempt d'antimoine et présentant un matériau actif positif contenant lesdites barbes.

5. Batterie acide-plomb selon l'une quelconque des revendications précédentes, du type scellé, dans laquelle de l'électrolyte est maintenu dans des pores d'un séparateur et de plaques positive et négative adjacentes d'un ensemble de plaques, de manière à ne pas être aisément fluide.

6. Batterie acide-plomb scellée selon la revendication 5, dans laquelle la plaque de séparateur présente une propriété d'absorption d'électrolyte élevée et est principalement réalisée en petites fibres de verre, d'un diamètre de 1 µm ou moins et empilées les unes sur les autres.

7. Batterie acide-plomb selon l'une quelconque des revendications précédentes, dans laquelle du matériau actif comprend un agent dispersant en sel de métal alcalin pyrophosphorique et/ou métaphosphorique.

8. Batterie acide-plomb selon la revendication 7, dans laquelle l'agent dispersant est du pyrophosphate de sodium et/ou du métaphosphate de sodium.

9. Batterie acide-plomb scellée selon la revendication 7 ou 8, dans laquelle le pyrophosphate ou le métaphosphate de sodium est présent en une quantité allant de 0,001 à 5 % en poids de matériau actif positif.

10. Batterie acide-plomb scellée selon la revendication 9, dans laquelle ladite quantité est de 0,05 à 0,3 % en poids.

11. Batterie acide-plomb selon l'une quelconque des revendications précédentes, dans laquelle le diamètre des barbes est de 0,01 à 1,0 µm.

12. Batterie acide-plomb selon l'une quelconque des revendications précédentes, dans laquelle le coefficient d'aspect des barbes est de 100 à 1.000.

13. Batterie acide-plomb selon l'une quelconque des revendications précédentes, dans laquelle l'aire de surface spécifique des barbes est de 10 à 40 m²/g.

14. Batterie acide-plomb selon l'une quelconque des revendications précédentes, dans laquelle le rapport entre les barbes et le matériau actif est de 0,01 à 2 % en poids.

15. Batterie acide-plomb selon la revendication 14, dans laquelle ledit rapport pour les barbes est de 0,01 à 1,0 % en poids.

16. Batterie acide-plomb selon l'une quelconque des revendications précédentes, dans laquelle la densité apparente du matériau actif positif est de 3,3 à 4,5 g/cm³.

17. Batterie acide-plomb selon l'une quelconque des revendications précédentes, dans laquelle la densité apparente du matériau actif négatif est de 3,1 à 4,0 g/cm³.

18. Batterie acide-plomb selon l'une quelconque des revendications précédentes, dans laquelle il existe 10⁹ ou plus de barbes de carbone et/ou de graphite pour 1 cm³ de volume apparent du matériau actif.

19. Batterie acide-plomb selon l'une quelconque des revendications précédentes, dans laquelle l'électrolyte est de l'acide sulfurique dilué.

20. Batterie acide-plomb selon la revendication 19, dans laquelle le poids spécifique de l'électrolyte à l'acide sulfurique dilué est d'au moins 1,350 d.

21. Procédé de production d'une batterie acide-plomb, dans lequel des barbes conductrices de l'électricité sont mélangées au matériau actif d'au moins l'une de ses plaques positive et négative, en une quantité allant de 0,01 à 10 % en poids (pds.%) du matériau actif, les barbes présentant des diamètres de 10 µm ou moins, des coefficients d'aspect de 50 ou plus et une aire de surface spécifique de 2 m2/g ou plus, les barbes servant à relier électriquement des particules de matériau les unes aux autres.

22. Procédé selon la revendication 21, dans lequel les barbes sont réalisées en carbone ou en graphite et sont réparties dans l'eau, avant d'être mélangées au matériau actif.
